# EUROPEAN PATENT SPECIFICATION

(11) **EP 1 707 988 B1**
(45) Date of publication and mention of the grant of the patent: **17.09.2008**
(21) Application number: 06251587.9
(22) Date of filing: 24.03.2006
(51) Int. Cl.: G01S 13/93, G01S 7/02, H01Q 1/42, B32B 27/30, H01Q 1/44, H01Q 1/32, B60R 13/00, B44C 5/04

(54) **Metallically gross layer decorative molded article for use in the beam path of a radar device**
Dekorative Mehrschichtabdeckung eines Radargeräts
Couvercle multicouche décoratif d'un dispositif radar

(30) Priority: 25.03.2005 JP 2005088284
(43) Date of publication of application: 04.10.2006
(73) Proprietor: Toyota Jidosha Kabushiki Kaisha, Toyota-shi Aichi-ken, 471-8571 (JP); TOYODA GOSEI CO., LTD., Nishikasugai-gun, Aichi 452-8564 (JP)
(72) Inventor: Kamiya, Itsuo, Aichi-ken 471-8571 (JP); Kamiya, Hideo, Aichi-ken 471-8571 (JP); Tsuge, Hiroki, Toyoda Gosei Co., Ltd., Nishikasugai-gun Aichi 452-8564 (JP); Fujii, Tetsuya, Toyoda Gosei Co., Ltd., Nishikasugai-gun Aichi 452-8564 (JP)
(74) Representative: Smith, Samuel Leonard

(56) References cited:
- US-A- 3 396 400
- US-A- 4 241 129
- PATENT ABSTRACTS OF JAPAN vol. 2000, no. 09, 13 October 2000 (2000-10-13) & JP 2000 159039 A (DAIMLERCHRYSLER AG), 13 June 2000 (2000-06-13) -& US 6 328 358 B1 (BERWEILER EUGEN) 11 December 2001 (2001-12-11)
- PATENT ABSTRACTS OF JAPAN vol. 2000, no. 05, 14 September 2000 (2000-09-14) & JP 2000 049522 A (DAIMLERCHRYSLER AG), 18 February 2000 (2000-02-18)
- PATENT ABSTRACTS OF JAPAN vol. 2000, no. 15, 6 April 2001 (2001-04-06) & JP 2000 344032 A (NISSAN MOTOR CO LTD), 12 December 2000 (2000-12-12)

## Description

### BACKGROUND OF THE INVENTION

### Field of the Invention

The invention relates to a metallically gross layer decorative molded article for protecting a radar device, particularly to a metallically gross layer decorative molded article placed in the beam path of a radar device installed behind the front grill of an automobile.

### Background Art

Generally, the antennae for the transmission or reception of radio wave on communications equipment or radars, for example, are not much limited in terms of their design regarding the antenna body or its surrounding structures because of the priority placed on their functionality. For example, in the case of automobile antennae for the onboard radio, for example, the bare rod antenna is used. However, it is sometimes desirable to hide the antenna, depending on its location. For example, in the case of a radar and the like for monitoring obstacles in front of the automobile or measuring its distance from the car in front, it is desirable to install the antenna at the center of the front of the car for optimum performance. In such cases, the antenna would have to be installed in the general area around the front grill of the car. In view of design considerations, however, the antenna should be invisible from the outside even in such cases.

In a technology called "auto cruise system," a sensor mounted at the front of the vehicle is used to measure the distance between one's own car and the car in front or the relative speed. Based on the thus acquired information, the throttles or brakes are controlled so as to accelerate or decelerate the vehicle and control the vehicle-to-vehicle distance. The auto cruise system is gaining attention as a corner stone of the so-called intelligent transport system (ITS) that aims to reduce traffic jams and accidents. The sensors used in the auto cruise system are generally provided by radio wave transmission/reception devices, such as millimeter wave radars.

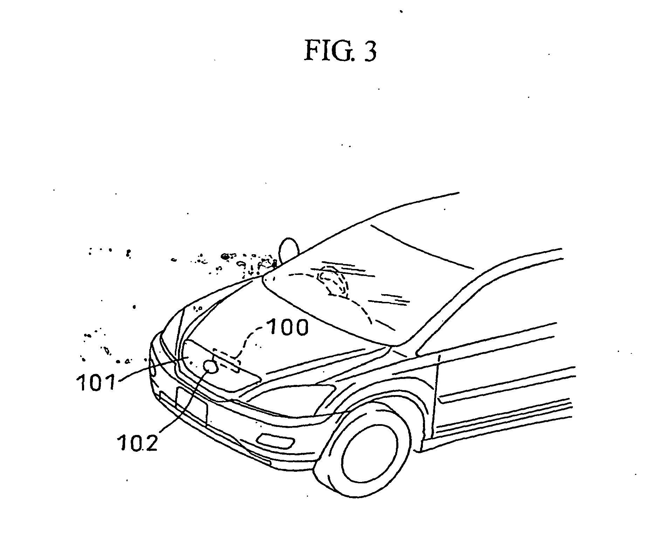

Fig. 3 shows a radar device 100 mounted on an automobile, which device is usually installed behind a front grill 101. The front grill 101 mounts an emblem 102 of the manufacturer of the vehicle or other unique ornaments. The millimeter wave is emitted by the radar device toward the front via the front grill and the emblem, and the wave reflected by an object returns to the radar through the front grill and the emblem.

Therefore, the front grill, emblem, and other portions in the beam path of the radar device preferably employ materials and paints that have little wave transmission loss and provide a desired appearance.

The radio wave transmission/reception device is thus generally mounted behind the front grill of a vehicle. The front grill, however, is often plated with metal, which is a good electric conductor and does not allow for easy transmission of radio waves. The front grill is also provided with ventilation openings for the intake of air, resulting in uneven thicknesses. If radio waves are transmitted through such a front grill, differences are caused in the transmission rate of the wave between the thinner and thicker portions of the front grill, thereby making it difficult to obtain good radar sensitivity.

Under such circumstances, it is common practice to provide a window through which radio wave can pass at a location of the front grill that corresponds to the location of the radio wave transmission/reception device. By providing such a window in the front grill, radio wave can be transmitted and received through the window. However, the window breaks the sense of continuity in the exterior of the front grill. It could also allow the interior of the vehicle, such as the radio wave transmission/reception device or the engine room, to be viewed, thereby damaging the appearance of the vehicle.

In a conventional art, to solve this problem, a radio wave transmitting cover as disclosed in JP Patent Publication (Kokai) No. 2000-159039 A is inserted in the window portion of the front grill so that a sense of unity can be established between the window and the front grill. The radio wave transmitting cover disclosed in JP Patent Publication (Kokai) No. 2000-159039 A is formed of a laminate of a plurality of resin layers formed with irregularities. Such a covering component, which has a metallic layer with irregularities vapor-deposited between the resin layers, can provide the impression that the fins of the front grill are continuously existing in the radio wave transmitting cover.

As a metal that is vapor-deposited on the radio wave transmitting cover, indium is used. When indium is vapor-deposited on a deposited member, indium is deposited on the surface of the deposited member not in the form of a uniform film but of fine islands. Specifically, when indium is deposited on the deposited member, the surface of the deposited member is rendered into a state where a fine island-like indium deposited portion and a non-deposited portion fmely exist together. In this case, radio wave can be transmitted through the non-deposited portion, and yet because of the fine island-like indium deposited portion, the surface of the deposited member is viewed as a member having a metallic luster.

However, indium is an expensive metal material and using it for deposition results in an increase in material cost. Furthermore, it is difficult to form the deposited portion and the non-deposited portion with desired proportions. For example, when the deposited portions are formed very close to one another, the entry and exit of radio wave could be hindered.

Furthermore, even if indium is deposited on a transparent resin via a colorless primer layer, it has not been possible to obtain a metallically gross design with a luxurious gold chrome-plated color tone or other color tones.

JP Patent Publication (Kokai) Nos. 2000-159039 A and 2000-49522 A disclose that a plastic covered component located within the beam path of the radar device is deposited with a thin metal layer consisting of indium in an area of a metal-made portion that is visible from the outside. In this case, however, it is necessary to ensure the durability and reliability of the metallically gross design and the radio wave transmitting property by forming a stable protection layer on the indium metallically gross film layer, so that the indium metallically gross film layer can be prevented from peeling or cutting by external force, or from corrosion due to external environmental stress such as water and polluted air.

This is due to the following reasons, among others. For one thing, indium is a very soft metal material, with a Mohs hardness of 1.2. For another, because indium is basically a metal material, it corrodes in the aforementioned environment. Also because indium is basically a metal material, it produces a radio wave transmission loss in the form of conduction loss, which makes it necessary to ensure durability and reliability by reliably ensuring a film thickness such that the indium metallically gross-tone design can be obtained without increasing the thickness too much. And yet for another thing, the melting point of indium is very low at 156°C, such that the indium layer is melted by the heat of molten resin during the secondary formation of a lining resin following the formation of a resin molded article on the surface of the substrate in advance.

In this connection, JP Patent Publication (Kokai) No. 2000-344032 A discloses that a ceramic film comprised of a silicon dioxide is provided as a protection layer for protecting the indium film from peeling and ensuring the corrosion resistance thereof.

It is also noted that, in order to prevent the erroneous reception of radio wave by the radar device, the exterior component of the radar device that has a metallic luster needs to attenuate the radio intensity as little as possible. Namely, in order to prevent the attenuation of radio wave by the exterior component itself, the refraction and reflection of radio wave between the materials and by metal films need to be minimized.

US 6,328,358, upon which the precharacterising portion of appended claim 1 is based, describes a cover part for a radar having a multilayer construction. In particular, a glass-clear transparent layer is provided at the front. A cover layer is provided at selected regions of the back side of the transparent layer as a mask. A vapour deposited metal layer is provided on the back side of the cover layer and at the back side of the transparent layer where the cover layer is not provided.

### SUMMARY OF THE INVENTION

A metallically gross layer decorative component having an indium deposited layer and a back surface painted in black according to a conventional art is capable of only expressing a color tone that is far from the ideal color tone of the chrome plating. It is also incapable of exhibiting a variety of metallic color tones, such as gold.

In view of such problems, it is an object of the invention to provide a metallically gross layer decorative molded article to be used in the beam path of a radar device, which article has a luxury metallic design similar to the color tone of chrome plating, for example, does not hinder the radio wave transmission of the device, and has excellent adhesion with the substrate.

The aforementioned object of the invention is achieved by using a molded article of a specific structure.

The invention provides a metallically gross layer decorative molded article as defined in appended claim 1.

A preferable example of indium alloy is an alloy of indium (In) with one or more elements selected from tin (Sn), gallium (Ga), antimony (Sb), and bismuth (Bi).

A preferable example of tin alloy is an alloy of tin (Sn) with one or more kinds of elements selected from indium (In), gallium (Ga), antimony (Sb), and bismuth (Bi).

The thickness of the metal layer is preferably 1 to 1000 nm (1 to 10000Å) and more preferably 5 to 500nm (50 to 5000Å) and most preferably 10 to 60nm (100 to 600Å).

The method for the formation of a metallic layer is not particularly limited. Specific examples include: vacuum thin-film formation methods such as vacuum deposition, ion plating, and sputtering; vapor-phase growth methods such as thermal CVD, plasma CVD, optical CVD, and MOCVD; LB (Langmuir-Blodgett) method; electroless deposition method; and sol-gel method. Of these methods, the vacuum deposition method or the sputtering method is preferable.

In the metallically gross layer decorative molded article of the invention, the transparent resin layer that forms the substrate is preferably comprised of one or more kinds selected from a polycarbonate resin layer, an acrylic resin layer, and a cyclic polyolefin resin layer.

A primer layer (undercoat layer) is provided between the substrate comprised of a transparent resin layer and a metallic layer. The primer layer is an undercoat layer for enchancing adhesion. The thickness of the primer layer is not particularly limited but is preferably 5 to 10 µm.

The invention also provides an automobile having the aforementioned metallically gross layer decorative molded article installed in the beam path of a radar device as a metallically gross decorative component.

By providing a colored primer layer on the back surface of the substrate, adhesion with the metal layer can be enhanced and the reflected light can be provided with a luxurious chrome-plated color tone. By providing the metal layer comprised of one or more layers from an indium layer, an indium alloy layer, a tin layer, and a tin alloy layer, a metallically gross layer decorative molded article for use in the beam path of a radar device can be provided that has a luxurious metallic design similar to the color tone of chrome-plating and that does not hinder radio wave transmission.

### BRIEF DESCRIPTION OF THE DRAWINGS

Fig. 1 shows an example of the cross-sectional structure of a metallically gross layer decorative molded article for use in the beam path of a radar device according to the invention.
Fig. 2 is a drawing for the explanation of a radio property testing method.
Fig. 3 shows a concept of an automobile equipped with a radar device.

### DESCRIPTION OF PREFERRED EMBODIMENTS

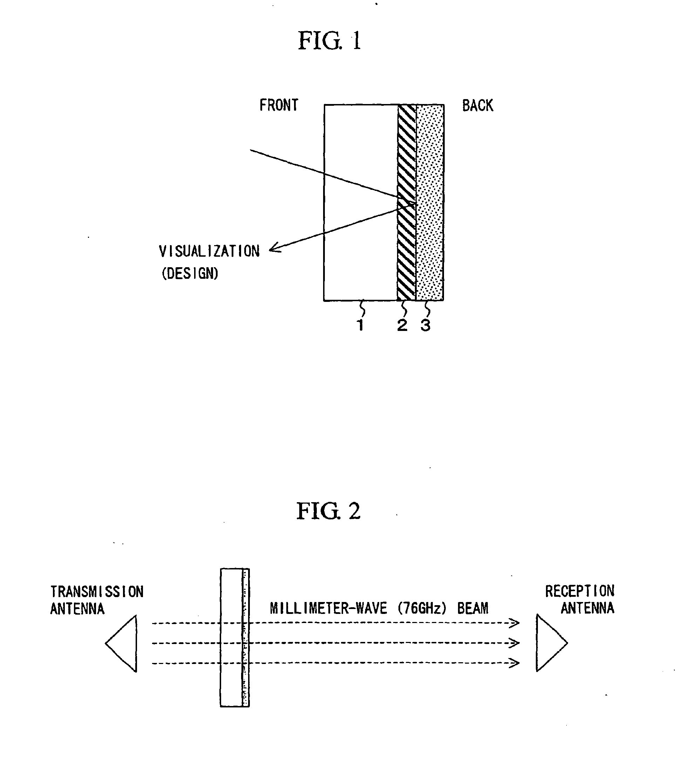

Fig. 1 shows an example of the cross-sectional structure of a molded article for use in the beam path of a radar device according to the invention. The metallically gross layer decorative molded article is comprised of, from-the front surface thereof, a transparent resin layer 1 as a substrate, a primer layer (undercoat layer) 2 for enhancing adhesion between the transparent resin layer 1 and a tin and/or tin alloy layer 3, and a metallic layer 3. Natural light that is incident on the metallically gross layer decorative molded article is transmitted by the transparent resin layer 1 and then reflected by the colored primer layer 2 while the color tone of the metal layer 3 is reflected in the reflected light. The primer layer 2 enhances the color tone of the indium, indium alloy, tin and/or tin alloy layer 3 to a luxurious color tone, such as that of a chrome color.

In Fig. 1, by selecting the material and the thickness of the colored primer layer 2 and/or the metal layer 3, any desired color can be exhibited. Also, by forming the metal layer 3 in a multilayered structure, a metallic exterior with rainbow-colored interference colors can be obtained.

The transparent resin layer 1 is comprised of a material that has a small radio wave transmission loss and an excellent dielectric characteristic. The dielectric characteristic is measured in terms of relative dielectric constant ε' and dielectric loss tan δ, for example, as indices. Preferably, the transparent resin layer 1 is made of polycarbonate resin, acrylic resin, or cyclic polyolefin resin.

Because cyclic polyolefin, which is one of the transparent resins used as a substrate in the invention and whose examples include polynorbomene resin and polycyclohexane resin, is amorphous, it has excellent transparency.

When cyclic polyolefin, with its small radio wave transmission loss and excellent dielectric property, is used in the transparent resin layer 1, the wettability of the substrate surface can be improved and its adhesion with the tin and/or tin alloy layer can be significantly improved by treating the substrate surface of the cyclic polyolefin resin layer with plasma etching and/or high-concentration ozone water.

To the transparent resin used as the substrate in the invention, there can be added other polymers as needed, such as rubber or other thermoplastic resin, for example. Examples of the rubber include thermoplastic elastomers such as natural rubber, polybutadiene rubber, polyisoprene rubber, acrylonitrile-butadiene copolymer rubber, styrene-butadiene copolymer rubber, styrene-isoprene copolymer rubber, styrene-butadiene-isoprene copolymer rubber, hydrogen-added diene-series rubber, saturated polyolefin rubber such as ethylene-α-olefin copolymer such as ethylene-propylene copolymer, ethylene-propylene-diene copolymer, α-olefin-diene copolymer, urethane rubber, silicone rubber, polyether rubber, acrylic rubber, styrene-butadiene-styrene block copolymer rubber, and styrene-isoprene-styrene block copolymer rubber, hydrogen-added thermoplastic elastomer, urethane thermoplastic elastomer, polyamide thermoplastic elastomer, and 1, 2-polybutadiene thermoplastic elastomer.

Examples of the other thermoplastic resin include polyolefins such as low-density polyethylene, high-density polyethylene, LLDPE, very low-density polyethylene, polypropylene, syndiotactic polypropylene, polybutene, and polypentene, polyesters such as polyethylene terephthalate and polybutylene terephthalate, polyamides such as nylon 6 and nylon 66, ethylene ethylacrylate copolymer, ethylene vinyl acetate copolymer, polystyrene, syndiotactic polystyrene, polyphenylene sulfide, polyphenylene ether, aromatic polyamide, and polycarbonate. These other thermoplastic resins may be used individually or in combination of two or more kinds, and their amounts added are such that the radio wave transmission property, durability, and abrasion resistance of the transparent resin are not lost. Specifically, their amounts are 50% by mass and preferably 30% by mass with respect to the transparent resin.

An additive may be added to the transparent resin as needed. Examples of the additive include antioxidant, ultraviolet absorber, lubricant, antifogging agent, de-misting agent, plasticizer, colorant, near-infrared absorbing agent, and antistatic agent.

A molded article of transparent resin can be manufactured by any of conventional methods, such as the melt molding method and the casting method. Examples of the melt molding method include melt extrusion methods such as T-die molding and inflation molding, calender method, heat-pressing method, and injection molding method. In the casting method, a liquid member with individual components dissolved or dispersed in a solvent is flow-cast on a support, and then the solvent is dried. Examples of the solvent used include aromatic hydrocarbons such as toluene, xylene, mesitylene, alicyclic hydrocarbons such as cyclohexane and decalin, and halogen compounds such as methylene chloride, chloroform, chlorobenzene, and dichlorobenzene. The concentration of the transparent resin in the liquid is normally 0.1 to 60% by mass and preferably 3 to 45% by mass. Methods for flow-casting the liquid on the support include those involving a bar coater, a doctor blade, a wire bar, a roll coater, a die coater, spraying, air-knife coating, spin coating, and dip coating. Drying and removal of the solvent is carried out in a usual manner such that the content of the remaining solvent is 5% by mass or less and preferably 1% by mass or less, and more preferably 0.5% by mass or less.

### Example

In the following, an example of the invention and a comparative example are described.

### (Example 1 and Comparative Example 1)

A planar test piece measuring 150 x 150 mm with a thickness of 5.5 mm was prepared from polycarbonate resin. A yellow-based primer was then applied to the thickness of 6 µm, on which tin was deposited to the thickness of 30nm (300Å). It was then compared with a test piece (Comparative Example 1) in terms of the visual exterior (design) of the surface, the millimeter wave transmission loss, and adhesive performance, which was measured by a cross-cut adhesion test. The test piece was comprised of a polycarbonate-formed film substrate that was coated with a colorless primer to the thickness of 6 µm on which tin was deposited to the thickness of 30nm (300Å).

The radio wave transmission loss (roundtrip) was measured by a predetermined method at 76GHz, which is the frequency used by vehicle-mounted millimeter-wave radars with radio wave transmission loss, as shown in Fig. 2. The cross-cut adhesion test was conducted by dividing the number of grids by the total number of grids and then multiplying the quotient by 100. Results of the performance comparison are shown in Table 1.

**Table 1**

| | Transparent resin layer | Primer layer | Metal deposited layer | Design | Millimeter-wave transmission loss (dB) (roundtrip) | Adhesive performance |
|---|---|---|---|---|---|---|
| Ex. 1 | Polycarbonate resin, thickness 5.5 mm | Tone: yellowish Thickness: 6 µm | Tin, thickness 30nm (300Å) | Metallically gross design with a luxurious golden chrome-plated tone | 1.6 - 1.8 | 0/100 |
| Comp. Ex. 1 | Polycarbonate resin, thickness 5.5 mm | Tone: colorless Thickness: 6 µm | Indium, thickness 30nm (300Å) | Blackish chrome-plated tone | 1.7 - 1.8 | 0/100 |

The results shown in Table 1 indicate that in Example 1 according to the invention, in which a colored primer layer is used, a luxurious chrome-plated tone or a chrome-plated tone with different tints can be obtained that do not hinder radar function. In addition, its performance in terms of the millimeter-wave transmission loss (roundtrip) in the 76GHz band is comparable to that of Comparative Example with its indium deposited layer.

## Claims

1. A metallically gross layer decorative molded article for use in the beam path of a radar device, said article comprising, from a front surface thereof:
a substrate (1) comprised of a transparent resin layer (1) and having a back surface;
a colored primer layer (2) provided on the back surface of said substrate (1), the colored primer layer (2) having a back surface; and
a metallic layer (3) provided on the back surface of said primer layer (2), said metallic layer (3) being comprised of one or more layers from an indium layer, an indium alloy layer, a tin layer, and a tin alloy layer; **characterised in that:**
the colored primer layer (2) is transparent so as to enhance the color tone of the metallic layer (3).

2. The metallically gross layer decorative molded article according to claim 1, wherein said indium alloy is an alloy of indium (In) with one or more kinds of elements selected from tin (Sn), gallium (Ga), antimony (Sb), and bismuth (Bi).

3. The metallically gross layer decorative molded article according to claim 1, wherein said tin alloy is an alloy of tin (Sn) with one or more kinds of elements selected from indium (In), gallium (Ga), antimony (Sb), and bismuth (Bi).

4. The metallically gross layer decorative molded article according to any one of claims 1 to 3, wherein said metallic layer (3) has a thickness of 10 to 60 nm.

5. The metallically gross layer decorative molded article according to any one of claims 1 to 4, wherein said metallic layer (3) is formed by vacuum deposition or sputtering.

6. The metallically gross layer decorative molded article according to any one of claims 1 to 5, wherein said transparent resin layer (1) comprises one or more layers selected from a polycarbonate resin layer, an acrylic resin layer, and a cyclic polyolefin resin layer.

7. The metallically gross layer decorative molded article according to any one of claims 1 to 6, wherein said primer layer (2) has a thickness of 5 to 10 µm.

8. The metallically gross layer decorative molded article according to any preceding claim wherein said primer layer (2) is an undercoat layer.

9. An automobile having the metallically gross layer decorative molded article according to any one of claims 1 to 8, wherein said metallically gross layer decorative molded article is installed in front of a radar device in the beam path of the radar device as a metallically gross decorative component.

## Patentansprüche

1. Metallisches dekoratives Mehrschichtformteil zur Verwendung in einem Strahlpfad einer Radarvorrichtung, wobei das Teil, an einer Vorderseite beginnend, aufweist:
ein Substrat (1), das aus einer transparenten Harzschicht (1) besteht und eine Rückseite aufweist;
einer farbigen Primerschicht (2), die auf der Rückseite des Substrats (1) vorgesehen ist, wobei die farbige Primerschicht (2) eine Rückseite aufweist; und
eine metallische Schicht (3), die auf der Rückseite der Primerschicht (2) vorgesehen ist, wobei die metallische Schicht (3) aus einer oder mehreren Schichten einer Indium-Schicht, einer Indium-Legierung-Schicht, einer Zinn-Schicht oder einer Zinn-Legierung-Schicht besteht, **dadurch gekennzeichnet, dass:**
die farbige Primerschicht (2) transparent ist, um den Farbton der metallischen Schicht (3) zu verstärken.

2. Metallisches dekoratives Mehrschichtformteil gemäß Anspruch 1, wobei die Indium-Legierung eine Legierung aus Indium (In) mit einer oder mehreren Arten von Elementen ist, die aus Zinn (Sn), Gallium (Ga), Antimon (Sb) und Bismut (Bi) ausgewählt werden.

3. Metallisches dekoratives Mehrschichtformteil gemäß Anspruch 1, die Zinn-Legierung eine Legierung aus Zinn (Sn) mit einer oder mehreren Arten von Elementen ist, die aus Indium (In), Gallium (Ga), Antimon (Sb) und Bismut (Bi) ausgewählt werden.

4. Metallisches dekoratives Mehrschichtformteil gemäß einem der Ansprüche 1 bis 3, wobei die metallische Schicht (3) eine Dicke von 10 bis 60 nm aufweist.

5. Metallisches dekoratives Mehrschichtformteil gemäß einem der Ansprüche 1 bis 4, wobei die metallische Schicht (3) durch Vakuumbedampfen oder Sputtern gebildet wird.

6. Metallisches dekoratives Mehrschichtformteil gemäß einem der Ansprüche 1 bis 5, wobei die transparente Harzschicht (1) eine oder mehrere Schichten aufweist, die aus einer Polycarbonatharz-Schicht, einer Acrylharz-Schicht und einer Harz-Schicht aus zyklischem Polyolefin ausgewählt wird.

7. Metallisches dekoratives Mehrschichtformteil gemäß einem der Ansprüche 1 bis 6, wobei die Primerschicht (2) eine Dicke von 5 bis 10 µm aufweist.

8. Metallisches dekoratives Mehrschichtformteil gemäß einem der vorstehenden Ansprüche, wobei die Primerschicht (2) eine Grundierungsschicht ist.

9. Automobil mit dem metallischen dekorativen Mehrschichtformteil gemäß einem der Ansprüche 1 bis 8, wobei das metallische dekorative Mehrschichtformteil vor einer Radarvorrichtung in dem Strahlpfad der Radarvorrichtung als eine metallische dekorative Mehrschichtkomponente angebracht ist.

## Revendications

1. Article moulé décoratif à couche métalliquement brute pour une utilisation dans le trajet de faisceau d'un dispositif radar, ledit article comprenant, à partir d'une surface avant de celui-ci :
un substrat (1) constitué d'une couche de résine transparente (1) et ayant une surface arrière ;
une couche d'amorce colorée (2) disposée sur la surface arrière dudit substrat (1), la couche d'amorce colorée (2) ayant une surface arrière; et
une couche métallique (3) disposée sur la surface arrière de ladite couche d'amorce (2), ladite couche métallique (3) étant constituée d'une ou plusieurs couches parmi une couche d'indium, une couche d'alliage d'indium, une couche d'étain et une couche d'alliage d'étain ; **caractérisé en ce que :**
la couche d'amorce colorée (2) est transparente de sorte à améliorer le ton de la couche métallique (3).

2. Article moulé décoratif à couche métalliquement brute selon la revendication 1, dans lequel ledit alliage d'indium est un alliage d'indium (In) avec un ou plusieurs types d'éléments choisis parmi l'étain (Sn), le gallium (Ga), l'antimoine (Sb) et le bismuth (Bi).

3. Article moulé décoratif à couche métalliquement brute selon la revendication 1, dans lequel ledit alliage d'étain est un alliage d'étain (Sn) avec un ou plusieurs types d'éléments choisis parmi l'indium (In), le gallium (Ga), l'antimoine (Sb) et le bismuth (Bi).

4. Article moulé décoratif à couche métalliquement brute selon l'une quelconque des revendications 1 à 3, dans lequel ladite couche métallique (3) a une épaisseur de 10 à 60 nm.

5. Article moulé décoratif à couche métalliquement brute selon l'une quelconque des revendications 1 à 4, dans lequel ladite couche métallique (3) est formée par dépôt sous vide ou par pulvérisation cathodique.

6. Article moulé décoratif à couche métalliquement brute selon l'une quelconque des revendications 1 à 5, dans lequel ladite couche de résine transparente (1) comprend une ou plusieurs couches choisies parmi une couche de résine de poly(carbonate), une couche de résine acrylique et une couche de résine de poly(oléfine) cyclique.

7. Article moulé décoratif à couche métalliquement brute selon l'une quelconque des revendications 1 à 6, dans lequel ladite couche d'amorce (2) a une épaisseur de 5 à 10 µm.

8. Article moulé décoratif à couche métalliquement brute selon l'une quelconque des revendications précédentes, dans lequel ladite couche d'amorce (2) est une sous-couche.

9. Automobile ayant l'article moulé décoratif à couche métalliquement brute selon l'une quelconque des revendications 1 à 8, dans laquelle ledit article moulé décoratif à couche métalliquement brute est installé devant un dispositif radar dans le trajet de faisceau du dispositif radar en tant que composant décoratif métalliquement brut.
